# EUROPÄISCHE PATENTSCHRIFT

(11) **EP 3 235 140 B1**
(45) Veröffentlichungstag und Bekanntmachung des Hinweises auf die Patenterteilung: **17.10.2018**
(21) Anmeldenummer: 15813308.2
(22) Anmeldetag: 10.12.2015
(51) Int. Cl.: H04B 7/08, H04B 1/08

(54) **VERFAHREN ZUM EMPFANG VON RUNDFUNKSIGNALEN IN EINEM FAHRZEUG UND RUNDFUNKEMPFANGSGERÄT**
METHOD FOR RECEIVING BROADCASTING SIGNALS IN A VEHICLE AND BROADCAST RECEIVER
MÉTHODE POUR LA RÉCEPTION DE SIGNAUX DE RADIODIFFUSION DANS UN VÉHICULE ET RÉCEPTEUR DE RADIODIFFUSION

(30) Priorität: 16.12.2014 DE 102014226142
(43) Veröffentlichungstag der Anmeldung: 25.10.2017
(73) Patentinhaber: Continental Automotive GmbH, 30165 Hannover (DE)
(72) Erfinder: KUHLMANN, Peter, 35630 Ehringshausen (DE); DOCHOW, Gerhard, 35580 Wetzlar (DE)
(86) Internationale Anmeldenummer: PCT/EP2015/079263
(87) Internationale Veröffentlichungsnummer: WO 2016/096604

(56) Entgegenhaltungen:
- DE-A1- 10 239 216
- DE-A1-102013 201 924
- US-A1- 2002 174 360

## Beschreibung

DE 10 2013 201 924 A1 (D1) betrifft eine Empfangsanordnung, ausgebildet für den Empfang hochfrequenter Signale und deren Bereitstellung nach einer Signalverarbeitung, wobei die Empfangsanordnung mindestens zwei Empfangseinrichtungen umfasst und jede Empfangseinrichtung zumindest zwei Empfangspfade bildet. Jede Empfangseinrichtung weist eine Routingeinheit auf, wobei die jeweilige Routingeinheit der Empfangseinrichtungen über einen Datenbus miteinander verbunden sind und die in Digitalsignale umgewandelten hochfrequenten Signale über den Datenbus der Empfangseinrichtung der zumindest einen weiteren Empfangseinrichtung zuführbar sind.

DE 102 39 216 A1 betrifft eine Diversity-Empfangsanlage für digital modulierte terrestische und/oder Satelliten-Funksignale im Frequenzbereich oberhalb 1 GHz für Fahrzeuge, die aus einer Antennenanordnung, deren Empfangssignal einem Funkempfänger zugeführt ist, besteht. Die Antennenanordnung ist als eine Antennenanlage, bestehend aus mehreren Einzelantennen oder/und aus mehreren Antennenteilen gestaltet und es ist eine steuerbare logische Schalteinrichtung vorhanden und die Einzelantennen und/oder die mehreren Antennenteile sind derart ausgestaltet und am Fahrzeug positioniert, dass bei diskret verfügbaren unterschiedlichen Schaltstellungen der steuerbaren logischen Schalteinrichtung an der Antennenanschlussstelle diversitätsmäßig unterschiedliche Empfangssignale gegeben sind.

US 2002 / 0174360 A1 betrifft ein Diensteanbietersystem bestehend aus einer Vielzahl von elektronischen Geräten, einem Diensteserver und einem Kommunikationsnetzwerk. Jedes elektronische Gerät ist ausgestattet mit einer Kommunikationsterminalfunktion, welche in einem beweglichen Gehäuse angeordnet ist und welcher eine eindeutige Geräte-ID zugewiesen ist. Der Diensteserver beinhaltet eine Funktionalität zur Bereitstellung eines vorbestimmten Dienstes und zum Speichern der eindeutigen Geräte-ID für jedes elektronische Gerät, an das Dienste bereitgestellt werden können. Das Dienstebereitstellungssystem beinhaltet Übertragungsmittel zur Benutzung der Dienste-ID zum Bereitstellen eines Zugangs, über das Kommunikationsnetzwerk, von dem Diensteserver zu einem spezifizerten elektronischen Gerät an welches ein spezifizierter Dienst bereitgestellt werden soll und zum Übermitteln der Diensteinformation, welche einen vorbestimmten Inhalt zur Realisation des spezifizierten Dienstes hat, an das spezifizierte elektronische Gerät.

Die Offenbarung betrifft ein Verfahren zum Empfangen von Rundfunksignale in einem Fahrzeug und einem durch Durchführung des Verfahrens eingerichtetes Rundfunkempfangsgerät, insbesondere zur Verwendung in einem Kraftfahrzeug. Bei dem erfindungsgemäß vorgeschlagenen Verfahren ist vorgesehen, dass mehrere Empfangspfade eines Rundfunkempfängers zur Verfügung stehen, um Rundfunksignale separat voneinander zu empfangen und rechnerisch zu verarbeiten. Diese Funktionsweise von Rundfunkempfängern ist grundsätzlich bekannt und wird daher nicht näher beschrieben.

Ferner sind jeweils mehrere Wiedergabegeräte mit jeweils einem oder mehreren Empfangspfaden verbindbar, um empfangene Rundfunksignale wiederzugeben, wobei mehrere Empfangspfade für ein Wiedergabegerät kombiniert werden können, um die Empfangsqualität zu verbessern.

Die Empfangsbedingungen von Rundfunkempfängern für Funksysteme, wie UKW, Kurzwelle, Mittelwelle, Langwelle, Digital Radio Mondiale (DRM), Digital Audio Broadcasting (DAB), Digitale Video Broadcasting (DVB) oder dergleichen, werden in der Regel durch einen Mehrwegeempfang beeinträchtigt. Der Grund dafür liegt im frequenz- und zeitselektiven Schwund, welcher durch ortsfeste und sich bewegende Streuobjekte sowie durch den selbst in Bewegung befindlichen Rundfunkempfänger verursacht werden. Beispiele für Streuobjekte sind Berge, Bäume, Gebäude und/oder andere Fahrzeuge. Solche Rundfunkempfänger finden sich in Fernsehgeräten und/oder Radiogeräten, die in Fahrzeugen installiert sind. Grundsätzlich unterscheiden sich diese Rundfunkempfänger nicht von Rundfunkempfängern in Wohnungen, in denen diese meist ortsfest installiert sind.

Es ist bekannt, in Funksystemen Maßnahmen gegen Effekte aus dem Mehrwegeempfang vorzusehen und die Signalqualität zu verbessern. Zum Beispiel ist hierzu das Orthogonal Frequency Division Multiplex-Verfahren (OFDM) bekannt, das ausschließlich im Rundfunkempfänger durchgeführt wird. Dabei finden eine entsprechende Entzerrung der Signale, eine Funkkanalabschätzung und die Decodierung der Signale statt. Diese Verarbeitungsschritte werden nachfolgend auch zusammengefasst als Empfangsverarbeitung bezeichnet.

Es ist auch bekannt, dass ein Rundfunkempfänger mehrere Antennen gleichzeitig benutzt und die Signale dieser verschiedenen Antennen auswertet. Dieses Vorgehen wird Diversity genannt und hat den Vorteil, dass durch geeignete Überlagerung (z.B. Phase-Diversity) der einzelnen Antennen, deren Signalqualität je nach Anordnung und Ausrichtung des Fahrzeuges voneinander abweichen, eine insgesamt bessere Empfangsqualität erreicht werden kann, als durch die Benutzung nur einer einzelnen Antenne. Alternativ kann auch die Antenne zum Empfang ausgewählt werden, die die momentan die beste Signalqualität liefert (z.B. Scan Diversity).

Ferner ist es bekannt, dass Rundfunkempfänger mehrere Empfangspfade nutzen, in denen eine getrennte rechnerische Verarbeitung der Empfangssingale erfolgt. Diese rechnerische Verarbeitung wird dann in einem Rechner oder auch in einem übergeordneten Rechner wieder kombiniert, um ein insgesamt hochwertigeres Wiedergabesignal zu erzeugen. Man bezeichnet diesen Vorgang auch als getrennte Basisbandverarbeitung mit den jeweiligen Empfangspfaden und einem nachgeordneten Combining, d.h. einer Kombination der verschiedenen Empfangssignale.

Die verschiedenen Empfangssingale werden in der Regel durch den Rundfunkempfänger fest kombiniert. In einigen Fällen findet die Konfiguration der Empfangspfade anhand von Anwendungsfällen statt.

Beispiele hierfür sind in einem Kraftfahrzeug, dass der Benutzer einer Rear-Seat-Unit (Rücksitzwiedergabeeinheit) ein Fernsehprogramm sieht und der Benutzer einer Head-Unit (Kopfeinheit) kein Fernsehprogramm sieht. In diesem Fall kann je nach vorhandenen Ressourcen, d.h. insbesondere der Anzahl der zur Verfügung stehenden Empfangspfade, ein Empfangspfad für eine Hintergrundsuche nach weiteren Sendern verwendet werden, die dem Nutzer dann bei einem Senderwechsel angeboten werden können. Wenn sowohl der Benutzer der Rear-Seat-Unit als auch der Benutzer der Head-Unit ein Fernsehprogramm sieht, werden hierfür sämtliche Empfangspfade eingesetzt. Ein Empfangspfad für eine Hintergrundsuche nach weiteren Sendern ist dann nicht mehr frei.

Der verwendete Begriff "Ressourcen" ist im Rahmen der vorliegenden Offenbarung insbesondere so zu verstehen, dass dieser alle an einem Empfangspfad beteiligten Hardwareelemente und Softwaremodule umfasst.

Ferner wurden bereits Systeme zur dynamischen Umschaltung von Phasen-Diversity, Scan-Diversity und abgeschalteter Diversity bei FM-Rundfunkempfängern in Abhängigkeit von der Empfangsqualität beschrieben, die bspw. als Multipath, Noise, Feldstärke, RDS, Bit-Fehlerrate und/oder dergleichen festgestellt wurde.
Das Problem bei der bisherigen Zuordnung der Empfangspfade besteht darin, dass diese in einem Wiedergabegerät entweder fest zugeordnet sind oder Empfangsqualitätsmessungen durchgeführt werden müssen, die aufgrund der gerade in einem bewegten Kraftfahrzeug häufig wechselnden Empfangssignalqualitäten nur schwer verlässlich auszuwerten sind. Dies führt zu einem hohen Rechenaufwand und unter Umständen einem hohen Umschalten zwischen verschiedenen Diversity-Einstellungen und Empfangspfaden, so dass zeitweise nicht genutzte Empfangspfade nur schlecht für andere Aufgaben verwendbar sind.
Aufgabe der vorliegenden Erfindung ist es daher, eine effektivere Zuordnung von Empfangspfaden zu Wiedergabegeräten zu erreichen.
Diese Aufgabe wird durch ein Verfahren mit den Merkmalen des Anspruchs 1 und ein Rundfunkempfangsgerät mit den Merkmalen des Anspruchs 10 gelöst. Die Erfindung betrifft ein Verfahren zum Empfang von Rundfunksignalen in einem Fahrzeug, wobei mehrere Empfangspfade eines Rundfunkempfängers zur Verfügung stehen, um Rundfunksignale separat voneinander zu empfangen und rechnerisch zu verarbeiten, und wobei mehrere Wiedergabegeräte mit jeweils einem oder mehreren Empfangspfaden selektiv verbindbar sind, um empfangene Rundfunksignale wiederzugeben, wobei mehrere Empfangspfade für ein Wiedergabegerät kombiniert werden können, um die Empfangsqualität zu verbessern. Es ist vorgesehen, dass eine gegenwärtige Position des Fahrzeugs auf der Erdoberfläche ermittelt wird und dass die Anzahl der Empfangspfade, die für ein Wiedergabegerät kombiniert werden, in Abhängigkeit von der gegenwärtigen Position des Fahrzeugs vorgegeben wird.

Die ermittelte Position des Fahrzeugs kann eine absolute Position sein, wie sie sich durch eine Satellitenortung ergibt. Hierfür kann der in den meisten Fahrzeugen ohnehin vorhandene Ortungsempfänger, bspw. ein GPS-Empfänger, verwendet werden. Es kann jedoch auch Sinn machen, relative Positionsinformationen des Fahrzeugs, bspw. durch einen Radimpulssensor, einen Kreiselkompasssensor oder dergleichen zu verwenden. Diese Positionsinformationen können erfindungsgemäß auch im Rahmen einer Koppelnavigation erhalten werden.

Insbesondere bei einer durch Satellitenortung festgestellten Position des Fahrzeugs kann die Anzahl der Empfangspfade, die für ein Wiedergabegerät kombiniert werden, in Abhängigkeit von der absoluten Position des Fahrzeugs vorgegeben werden. Hierzu kann bspw. auf eine Datenbank mit positionsabhängigen Empfangsqualitäten zurückgegriffen werden, so dass aus der Positionsinformation unmittelbar ein Rückschluss auf den Empfang bzw. die Empfangsqualität in dieser Position möglich ist. Dies bietet sich insbesondere in Städten an, in denen die Empfangsqualitäten aufgrund der wechselnden Ausrichtung der Bebauung relativ zu dem Fahrzeug und dem Sender für ständig wechselnde Empfangsqualitäten sorgen.

Gemäß einem bevorzugten Aspekt der vorliegenden Erfindung ist es möglich, dass aus gemessenen Empfangsqualitäten und/oder Funkprognosen eine Datenbank mit positionsabhängigen Empfangsqualitäten ermittelt wird. Diese kann im Rahmen des vorgeschlagenen Verfahrens bspw. in dem Rundfunkempfangsgerät oder einem sonstigen zur Verfügung stehenden Speicher abgespeichert werden, so dass jedes Fahrzeug gerade an bevorzugten Aufenthaltspositionen, wie sie sich im Alltag ergeben, eine sehr detaillierte Information zur positionsabhängigen Empfangsqualität aufbauen kann. Hierdurch wird also die Position des Fahrzeugs der Empfangsqualität an der Position des Fahrzeugs zugeordnet, und dieser Zusammenhang kann unmittelbar verwendet werden, um die Anzahl der Empfangspfade für ein Wiedergabegerät festzulegen oder mit zu bestimmen. Auch hierfür können Empfangsqualitätsschwellen dienen.

Es kann insbesondere vorgesehen sein, dass die Geschwindigkeit des Fahrzeugs ermittelt wird und dass die Anzahl der Empfangspfade, die für ein Wiedergabegerät kombiniert werden, in Abhängigkeit von der Geschwindigkeit des Fahrzeugs vorgegeben wird. Somit erfolgt zur Laufzeit des Systems eine dynamische Entscheidung darüber, wie die Empfangspfade zu kombinieren sind, um für die ausgewählten Wiedergabegeräte in der aktuellen Situation eine möglichst zuverlässige und störungsfreie Signalwiedergabe zu ermöglichen. Dabei kann die Erfahrung ausgenutzt werden, dass mit zunehmender Geschwindigkeit des Fahrzeugs mehr Empfangspfade notwendig sind, um eine störungsfreie Wiedergabe des Rundfunksignals auf einem Wiedergabefeld zu ermöglichen.

Daher ist es gemäß einer besonders bevorzugten Ausführungsform möglich, dass die Anzahl der für ein Wiedergabegerät kombinierten Empfangspfade mit steigender Geschwindigkeit erhöht würde. Dies kann einfacher Weise dadurch erreicht werden, dass für ermittelte Geschwindigkeitsschwellen des Fahrzeugs für ein Wiedergabegerät die Anzahl der Empfangspfade vorgegeben wird. Dies kann zusätzlich auch von dem Typ des Wiedergabegeräts abhängen.

Es ist möglich, dass im Rahmen des Verfahrens zur Feststellung der Geschwindigkeit des Fahrzeugs auf in dem Fahrzeug vorhandene Informationen zurückgegriffen wird, die bspw. aus Steuergeräten abrufbar sind. Dies ist jedoch nicht immer möglich. In einem solchen Fall kann aus Positionsinformationen des Fahrzeugs und einem zu den Positionsinformationen gehörenden Zeitstempel die Geschwindigkeit des Fahrzeugs auch abgeschätzt werden. Hierzu reichen auch relative Positionsinformationen bzw. Positionsangaben, bspw. durch einen Radsensor oder einen Kreiselkompass. Anschlüsse für derartige Sensoren oder die Übermittlung entsprechender Sensordaten können an dem erfindungsgemäß vorgeschlagenen Rundfunkempfangsgerät vorgesehen sein. Entsprechend werden die Positionsinformationen und die zugehörigen Zeitstempel ausgewertet, um die Geschwindigkeit des Fahrzeugs zu ermitteln. Die Positionsinformationen können neben den erwähnten Sensoren natürlich auch direkt von einem GPS-Empfänger stammen. Da es bei der Ermittlung der Geschwindigkeit nur auf eine relative Zeit ankommt, können die Zeitstempel auch von einer relativen Uhr, wie z.B. einem Zähler bzw. Tick-Count einer beteiligen Recheneinheit, herrühren. Natürlich können die Zeitstempel auch auf eine absolute Zeit kalibriert sein, die sich unter Benutzung eines Satellitenortungssystems (bspw. GPS) oder der Rundfunkdaten des Rundfunksystems (bspw. Zeit aus der RDS-Gruppe 4a) ergeben. Wenn der Rundfunkempfänger mit einem Mobilfunkempfänger kombiniert ist, können alternativ auch die Daten der aktuell benutzten Mobilfunkzelle zur Positionsbestimmung herangezogen werden.

Aufgrund der Positionsinformationen und den daraus geschätzten Geschwindigkeiten sowie der aus diesen Daten abgeleiteten Fahrsituation wird eine Entscheidung über die Verwendung der Empfangspfade und der in den Empfangspfaden beteiligten Ressourcen getroffen, um in dem Wiedergabegerät eine störungsfreie Wiedergabe zu ermöglichen.

Besonders bevorzugt kann dabei auch vorgesehen sein, dass die Anzahl der Empfangspfade, die für ein Wiedergabegerät ausgewählt werden, abhängig von der Anzahl der Wiedergabegeräte gewählt wird, die durch den Nutzer gleichzeitig für den Empfang und die Ausgabe von Rundfunksignalen in dem Fahrzeug vorgesehen werden.

Zusätzlich zu der Anzahl der Wiedergabegeräte bzw. den vorher bereits erwähnten Kriterien kann auch vorgesehen sein, dass die Art der Wiedergabegeräte in die Entscheidung mit einfließt, wie viele Empfangspfade für das Wiedergabegerät kombiniert werden. Üblicher Weise ist es so, dass bspw. Videosignale bzw. kombinierte Video- / Audiosignale höhere Anforderungen an die Signalqualität stellen als reine Audiosignale. Entsprechend wird für einen TV-Empfang die Anzahl der Empfangskanäle höher ausfallen als für einen Rundfunkempfang, um ein möglichst störungsfreies Rundfunksignal wiedergeben zu können.

Im Rahmen des vorgeschlagenen Verfahrens kann ferner vorgesehen sein, dass eine Rangfolge der Wiedergabegeräte vorgegeben wird, und dass in der Rangfolge nachgeordnete Wiedergabegeräte abgeschaltet werden, wenn eine benötigte Anzahl von Empfangskanälen für einen ungestörten Rundfunkempfang nicht mehr zur Verfügung steht. Hierdurch ist es für den Nutzer möglich, eine Priorisierung der Wiedergabegeräte vorzugeben, die ggf. auch um-parametrierbar ist, so dass die von dem Nutzer unbedingt gewünschten Empfangskanäle mit großer Sicherheit und einen zuverlässigen Rundfunksignal tatsächlich zur Verfügung stehen.

Ferner kann vorgesehen werden, dass Wiedergabegeräte in Abhängigkeit von der Fahrsituation des Fahrzeugs, d.h. insbesondere von der Geschwindigkeit, ggf. aber auch von der Position des Fahrzeugs oder einer Kombination von Geschwindigkeit und Position des Fahrzeugs, deaktiviert werden. Dies macht insbesondere dann Sinn, wenn aufgrund der Fahrsituation erfahrungsgemäß kein zeitlich stabiles Rundfunksignal mehr empfangen werden kann und die Wiedergabe der Rundfunksignale so störanfällig ist, dass es besser ist, eine Ausgabe des Rundfunksignals zumindest zeitweilig zu deaktivieren.

Unabhängig davon, welche der vorgenannten Kriterien alleine oder in Kombination für das An- und Abschalten und/oder für die Anzahl der Empfangskanäle pro Wiedergabegerät gewählt werden, wird erfindungsgemäß in einer bevorzugten Ausführungsform vorgeschlagen, für die Wiedergabe auf Wiedergabegeräten nicht genutzte Empfangskanäle zur Durchführung eines Backgroundscans zur Ermittlung von empfangbaren Rundfunksendern und/oder für Nutzerdienste zum Bereitstellen zusätzlicher Daten zu verwenden. Der Backgroundscan stellt einen Hintergrundsuchlauf dar, mit dem momentan empfangbare Sender festgestellt werden. Diese lassen sich in dem Rundfunkgerät vorspeichern, so dass dem Nutzer bei einem gewünschten Senderwechsel eine Auswahl der derzeit empfangbaren Sender angeboten werden kann. Bei den Nutzerdiensten kann es sich bspw. um Programminformationen wie EPG (Electronic Program Guide) handeln.
Erfindungsgemäß macht es auch Sinn, die Anzahl der Empfangskanäle, die für ein Wiedergabegerät ausgewählt werden, zusätzlich abhängig von der gemessenen Empfangsqualität zu wählen. Dies kann ein weiteres sinnvolles Kriterium bei der Auswahl darstellen und die Zuverlässigkeit des Empfangs weiter verbessern.
Entsprechend betrifft die Erfindung auch ein Rundfunkgerät zur Verbindung mit vorzugsweise mehreren Wiedergabegeräten, erfindungsgemäß ggf. aber auch nur einem Wiedergabegerät, für die Wiedergabe von Rundfunksignalen gemäß Anspruch 10. Das Rundfunkgerät weist einen Rundfunkempfänger auf, welcher über mehrere Empfangspfade verfügt, um Rundfunksignale separat voneinander zu empfangen und rechnerisch zu verarbeiten. Dabei ist ein Wiedergabegerät mit jeweils einem oder mehreren Empfangspfaden verbindbar, um empfangene Rundfunksignale wiederzugeben, wobei mehrere Empfangspfade für ein Wiedergabegerät kombinierbar sind, um die Empfangsqualität zu verbessern.

Die technische Umsetzung eines solchen Systems ist dem Fachmann bekannt.

Erfindungsgemäß verfügt das Rundfunkempfangsgerät über mindestens einen Anschluss zum Anschließen von Steuergeräten und/oder Sensoren, um Positions- und/oder Geschwindigkeitsinformationen des Fahrzeugs zu erhalten. Die Anschlüsse können insbesondere Anschlüsse an einen GPS-Empfänger bzw. allgemeiner ein Satellitenortungsgerät und/oder an verschiedene Sensoren, wie bspw. einen Radsensor oder einen Kreiselkompass, sein. Auch kann ein Anschluss an ein Fahrzeug-Bussystem bestehen, indem diese Informationen aus verschiedenen Steuergeräten abrufbar sind.

Erfindungsgemäß weist das Rundfunkempfangsgerät ferner eine Recheneinheit auf, welche zur Durchführung des vorbeschriebenen Verfahrens oder Teilen hiervon eingerichtet ist.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

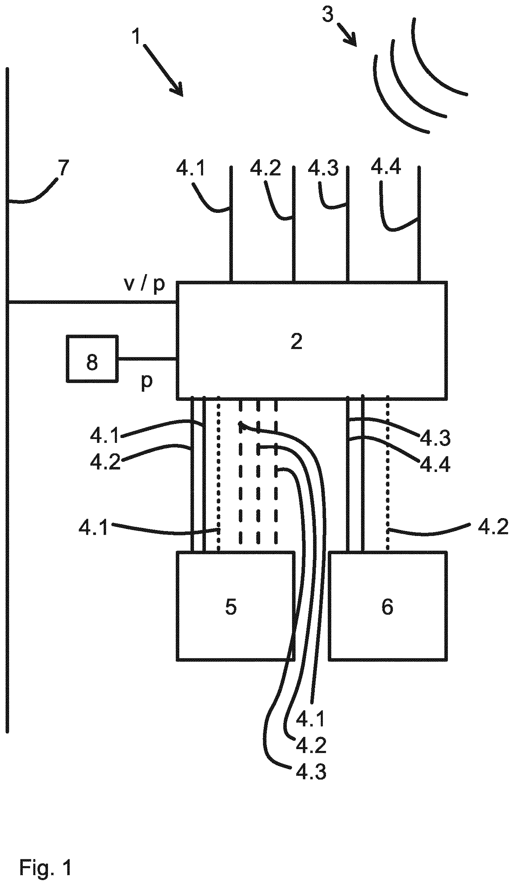

Die einzige Fig. 1 stellt schematisch ein Rundfunkempfangsgerät 1 in einer bevorzugten Ausführungsform der vorliegenden Erfindung dar und weist einen Rundfunkempfänger 2 zum Empfangen von Rundfunksignalen 3 auf, die durch nicht dargestellte Rundfunksender ausgestrahlt werden. In dem dargestellten Beispiel verfügt der Rundfunkempfänger 2 über vier Empfangspfade 4.1, 4.2, 4.3 und 4.4. die Empfangspfade 4.1 bis 4.4 ermöglichen es dem Rundfunkempfänger 2, die Rundfunksignale 3 separat voneinander zu empfangen und rechnerisch zu verarbeiten.

Ferner sind die Empfangspfade 4.1, 4.2, 4.3 und 4.4 mit jeweils einem von in dem dargestellten Beispiel zwei Wiedergabegeräten 5, 6 verbindbar, die nachfolgend als erstes Wiedergabegerät 5 und zweites Wiedergabegerät 6 bezeichnet werden.

Die Anzahl der Empfangspfade 4.1 bis 4.4 und der Wiedergabegeräte 5, 6 ist nur beispielhaft gewählt und soll die vorliegende Erfindung nicht beschränken.

Allgemein verfügt der Rundfunkempfänger 2 also über n Empfangspfade und muss damit m Wiedergabegeräte bedienen, die auch als Senken (für die Empfangspfade 4.1 bis 4.4) bezeichnet werden. In der Regel werden in dem Rundfunkempfangsgerät 1 bzw. dem Rundfunkempfänger 2 mehr Empfangspfade 4.1 bis 4.4 als Senken (Wiedergabegeräte 5, 6) vorhanden sein (n > m), damit eine Kombination mehrere Empfangspfade 4.1, 4.2, 4.3, 4.4 für ein Wiedergabegerät 5, 6 möglich ist, wenn ein unterschiedliches Rundfunkprogramm aus verschiedenen Empfangspfaden (also in der Regel auf unterschiedlichen Empfangsfrequenzen) auf den Wiedergabegeräten wiedergegeben werden soll. Es besteht auch die Möglichkeit mehrere Wiedergabegeräte anzuschließen, die dann aber nur Programme aus einem gemeinsamen Empfangskanal wiedergeben können.

Ferner verfügt der Rundfunkempfänger 2 über Schnittstellen zur Eingabe von Positionsinformationen p und/oder Geschwindigkeitsinformation v. Diese werden ihm entweder von anderen Steuergeräten über ein Fahrzeugbussystem 7 und/oder durch geeignete Sensoren 8 zur Verfügung gestellt. Als Sensoren 8 kommen bspw. ein Radsensor oder ein Kreiselkompass in Frage. Steuergeräte zur Übertragung von Geschwindigkeitsinformation v und/oder Positionsinformationen p über den Fahrzeugbus 7 können bspw. Teil von Satellitenortungssystemen sein, die als Steuergeräte in dem Fahrzeug vorhanden sind. Beispielswiese kann als solches Satellitenortungssystem ein GPS-Empfänger dienen oder eine Anbindung zu einem Mobilfunkempfänger zur Auswertung der Position der aktuellen Mobilfunkzelle.

Falls über die Positionsinformationen p festgestellt wird, dass sich der Rundfunkempfänger 2 in einem Gebiet mit sehr guten Empfangsbedingungen befindet und/oder über die Geschwindigkeitsinformation v festgestellt wird, dass sich der Empfänger 2 in Ruhe befindet, ist es ausreichend, pro Senke bzw. Wiedergabegerät 5, 6 jeweils nur einen Empfangspfad 4 zu verwenden. Dies ist in Fig. 1 durch die gepunkteten Linien dargestellt, von denen der Empfangspfad 4.1 mit dem ersten Wiedergabegerät 5 und der Empfangspfad 4.2 mit dem zweiten Wiedergabegerät 6 verbunden sind. Die zwei Empfangspfade 4.3 und 4.4, die in diesem Fall für eine Wiedergabe der Rundfunksignale an beiden Wiedergabegeräten 5, 6 nicht notwendig sind, werden frei, um einen Backgroundscan durchzuführen und/oder weitere Programminformationen zur Verfügung zu stellen.

Je schneller sich ein Fahrzeug bewegt, desto mehr Empfangspfade 4 müssen für die Berechnung der Nutzdaten, insbesondere Audio- und/oder Videodienste, ggf. aber auch Datendienste, eines Wiedergabegeräts 5, 6 herangezogen werden, um bspw. Doppler-Effekte kompensieren zu können.

Werden mehr Empfangspfade für den störungsfreien Empfang eines Ensembles (Zusammenstellung von verschiedenen Programmen in einem Empfangskanal, z.B. das RTL Ensemble mit RTL1, RTL2 und Super RTL als Programmen) benötigt als für den störungsfreien Empfang von unterschiedlichen Ensembles, kann erfindungsgemäß gemäß einen eigenen Aspekt der Erfindung, der allen beschriebenen Merkmalen kombinierbar ist, automatisch die Wiedergabemöglichkeit auf den Wiedergabegeräten 5 und 6 auf die Wiedergabe der verfügbaren Programme in einem Empfangskanal beschränkt werden. Welches Ensemble als Einziges vom Empfänger 2 mit allen benötigten Empfangspfaden empfangen werden kann, kann zum Beispiel durch eine festgelegte Priorisierung der Wiedergabegeräte oder durch eine Benutzerabfrage an einem der Wiedergabegeräte entschieden werden.

Stehen die entsprechenden Empfangspfade 4.1 bis 4.4 und die damit verbundenen Ressourcen für eine ungestörte Wiedergabe nicht zur Verfügung, wird die Wiedergabe auf einem oder beiden Wiedergabegeräten 5, 6 angehalten bzw. stumm geschaltet.

Für den Fall, dass sich das Fahrzeug schneller als eine Mindestgeschwindigkeit vₘᵢₙ bewegt, soll eine Videowiedergabe auf einem dem Fahrer zugewandten Display (Wiedergabegerät) abgeschaltet werden. Die damit verbundenen Ressourcen, respektive Empfangspfade 4.1 bis 4.4 können dann für andere Aufgaben verwendet werden, bspw. einen Backgroundscan oder das Bereitstellen zusätzlicher Daten wie Programminformationen.

In einem konkreten Beispiel sei der in Fig. 1 dargestellte Rundfunkempfänger 2 ein Rundfunkempfangsgerät 1 für digitales Fernsehen, das z.B. DVB-T-Rundfunksignale in einem Fahrzeug empfängt. Der Rundfunkempfänger 2 hat vier Empfangspfade 4.1 bis 4.4 und soll zwei Wiedergabegeräte 5, 6 bedienen, die eine Head-Unit und eine Rear-Seat-Unit darstellen. Die Head-Unit bietet ein TV-Signal im vorderen Fahrgastraum an, das auch für den Fahrer einsehbar ist. Die Rear-Seat-Unit bietet ein TV-Signal an der Rückseite der Vordersitze an.

Unter ungünstigen Empfangsbedingungen und/oder bei hoher Geschwindigkeit v des Fahrzeugs verwendet der Rundfunkempfänger 2 drei Empfangspfade 4.1, 4.2, 4.3, um eine maximale Kombination von drei Empfangspfaden 4.1, 4.2, 4.3 zur Verfügung zu stellen und auf dem ersten Wiedergabegerät 5 ein möglichst ungestörtes Wiedergabesignal zu erzeugen. Das Wiedergabegerät 5 wird also mit hoher Zuverlässigkeit bedient. Dies ist in Fig. 1 durch die gestrichelten Linien der Empfangspfade 4.1, 4.2 und 4.3 verdeutlicht.

Den vierten Empfangspfad 4.4 verwendet der Rundfunkempfänger 2 in diesem Fall für einen Backgroundscan, um an dem aktuellen Ort des Fahrzeugs empfangbare Sender zu ermitteln. Aufgrund der hohen Geschwindigkeit kann das zweite Wiedergabegerät 6 zum Empfang eines anderen Ensembles nicht bedient werden.

Unter normalen Empfangsbedingungen und bei einer mittleren Geschwindigkeit v des Fahrzeugs, verwendet der Rundfunkempfänger 2 jeweils zwei Empfangspfade 4 für eine Senke. Konkret verbindet er die Empfangspfade 4.1 und 4.2 mit dem ersten Wiedergabegerät 5 und die Empfangspfade 4.3 und 4.4 mit dem zweiten Wiedergabegerät 6. Wenn auf beiden Wiedergabegeräten 5, 6 das Rundfunksignal dargestellt werden soll, steht kein weiterer Empfangspfad 4.1 bis 4.4 bspw. für einen Backgroundscan nach weiteren empfangbaren Sendern oder für weitere Programminformationen zur Verfügung.

Falls die Empfangsbedingungen für einen Pfad sehr gut sind und das Fahrzeug sehr langsam fährt, wird die Diversity mehrerer Empfangspfade 4.1 bis 4.4 für ein Wiedergabegerät 5, 6 aufgegeben. Die freigewordenen Empfangspfade 4.1 bis 4.4 können dann für Datendienste oder Backgroundscans im Sinne eines Senderlistenaufbaus genutzt werden.

Mit Hilfe der Erfindung können gute Empfangsbedingungen, über eine gute Geschwindigkeit des Fahrzeugs ggf. in Verbindung mit einer guten Empfangsleistung und/oder anderen beispielhaft erwähnten Kriterien festgestellt werden, um dann fundiert zu entscheiden, dass es ausreicht, nur zwei Empfangspfade 4.1, 4.2 für zwei Wiedergabegeräte 5 und 6 zu verwenden. Ein dritter Empfangspfad 4.3 wird frei, um über das Rundfunksystem DVB-T oder auch DAB HTML weitere Seiten zu empfangen und im Browser auf der Head-Unit anzuzeigen. Ein weiterer Empfangspfad 4.4 wird frei, um einen Backgroundscan durchzuführen.

Alternativ können bei mittleren Empfangsbedingungen zwei Empfangspfade 4.1 und 4.2 sowie 4.3 und 4.4 paarweise zusammengeschaltet werden, um den Empfang unterschiedlicher Empfangskanäle (und damit Ensembles) durch den Empfänger 2 und die getrennten Wiedergabe von unterschiedlichen Programmen aus verschiedenen Ensembles auf den Wiedergabegeräten 5 und 6 zu ermöglichen.

Falls sich das Fahrzeug bewegt, werden die Empfangspfade 4.1 bis 4.4 entsprechend umkonfiguriert. Als erstes entfällt der Empfang von Datendiensten mit statischen Information (z. B. das Laden der HTML-Seiten). Hierdurch entstehen für den Benutzer die geringsten Nachteile, weil die empfangbaren HTML-Seiten in einem von den Fahrzeugempfang unabhängigen Browser bspw. eines Smartphones, noch empfangbar sind.

## Patentansprüche

1. Verfahren zum Empfang von Rundfunksignalen (3) in einem Fahrzeug, wobei mehrere Empfangspfade (4.1 bis 4.4) eines Rundfunkempfängers (2) zur Verfügung stehen, um Rundfunksignale (3) separat voneinander zu empfangen und rechnerisch zu verarbeiten, und wobei mehrere Wiedergabegeräte (5, 6) mit jeweils einem oder mehreren Empfangspfaden (4.1 bis 4.4) selektiv verbindbar sind, um empfangene Rundfunksignale (3) wiederzugeben, wobei mehrere Empfangspfade (4.1 bis 4.4) für ein Wiedergabegerät (5, 6) kombiniert werden können, um die Empfangsqualität zu verbessern, **dadurch gekennzeichnet, dass** eine gegenwärtige Position des Fahrzeugs auf der Erdoberfläche ermittelt wird und dass die Anzahl der Empfangspfade (4.1 bis 4.4), die für ein Wiedergabegerät (5, 6) kombiniert werden, in Abhängigkeit von der gegenwärtigen Position des Fahrzeugs vorgegeben wird.

2. Verfahren nach Anspruch 1, **dadurch gekennzeichnet, dass** aus gemessenen Empfangsqualitäten und/oder Funkprognosen eine Datenbank mit positionsabhängigen Empfangsqualitäten ermittelt wird.

3. Verfahren nach Anspruch 1, **dadurch gekennzeichnet, dass** aus Positionsinformationen (p) des Fahrzeugs und einem zu den Positionsinformationen gehörenden Zeitstempel die Geschwindigkeit des Fahrzeugs abgeschätzt wird.

4. Verfahren nach Anspruch 3, **dadurch gekennzeichnet, dass** die Anzahl der für ein Wiedergabegerät kombinierten Empfangspfade (4.1 bis 4.4) mit steigender Geschwindigkeit erhöht wird.

5. Verfahren nach einem der vorhergehenden Ansprüche, **dadurch gekennzeichnet, dass** die Anzahl der Empfangspfade (4.1 bis 4.4), die für ein Wiedergabegerät (5, 6) ausgewählt werden, abhängig von der Anzahl der Wiedergabegeräte (5, 6) gewählt wird, die gleichzeitig für den Empfang und die Ausgabe von Rundfunksignalen (3) in Betrieb sind.

6. Verfahren nach einem der vorgehenden Ansprüche, **dadurch gekennzeichnet, dass** eine Rangfolge der Wiedergabegeräte (5, 6) vorgegeben wird und dass in der Rangfolge nachgeordnete Wiedergabegeräte (5, 6) abgeschaltet werden, wenn eine benötigte Anzahl von Empfangspfaden (4.1 bis 4.4) für einen ungestörten Rundfunkempfang in einem in der Rangfolge höher stehenden Wiedergabegerät nicht mehr zur Verfügung steht.

7. Verfahren nach einem der vorhergehenden Ansprüche, **dadurch gekennzeichnet, dass** bestimmte Wiedergabegeräte (5, 6) in Abhängigkeit von der Fahrsituation des Fahrzeugs deaktiviert werden.

8. Verfahren nach einem der vorhergehenden Ansprüche, **dadurch gekennzeichnet, dass** für die Wiedergabe auf Wiedergabegeräten (5, 6) nicht genutzte Empfangspfade zur Durchführungen eines Backgroundscans und/oder für Nutzerdienste verwendet werden.

9. Verfahren nach einem der vorhergehenden Ansprüche, **dadurch gekennzeichnet, dass** die Anzahl der Empfangspfade (4.1 bis 4.4), die für ein Wiedergabegerät (5, 6) ausgewählt werden, abhängig von einer gemessenen Empfangsqualität gewählt wird.

10. Rundfunkempfangsgerät zur Verbindung von Wiedergabegeräten für die Wiedergabe von Rundfunksignalen mit einem Rundfunkempfänger (5, 6), welcher über mehrere Empfangspfade (4.1 bis 4.4) verfügt, um Rundfunksignale (3) separat voneinander zu empfangen und rechnerisch zu verarbeiten, wobei ein Wiedergabegerät (5, 6) mit jeweils einem oder mehreren Empfangspfaden (4.1 bis 4.4) verbindbar ist, um empfangene Rundfunksignale (3) wiederzugeben, und wobei mehrere Empfangspfade (4.1 bis 4.4) für ein Wiedergabegerät kombinierbar sind, um die Empfangsqualität zu verbessern, **dadurch gekennzeichnet, dass** das Rundfunkempfangsgerät (1) über Anschlüsse zum Anschließen von Steuergeräten und/oder Sensoren (8) sowie über eine Recheneinheit verfügt, wobei die Recheneinheit zur Durchführung des Verfahrens nach einem der Ansprüche 1 bis 9 eingerichtet ist.

## Claims

1. Method for receiving broadcast signals (3) in a vehicle, wherein there are available a plurality of reception paths (4.1 to 4.4) for a broadcast receiver (2) in order to receive and computationally process broadcast signals (3) separately from one another, and wherein a plurality of playback devices (5, 6) can each be selectively connected to one or more reception paths (4.1 to 4.4) in order to play back received broadcast signals (3), wherein a plurality of reception paths (4.1 to 4.4) can be combined for one playback device (5, 6) in order to improve the reception quality, **characterized in that** a current position of the vehicle on the surface of the earth is ascertained, and **in that** the number of reception paths (4.1 to 4.4) that are combined for a playback device (5, 6) is defined according to the current position of the vehicle.

2. Method according to Claim 1, **characterized in that** a database containing position-dependent reception qualities is established from measured reception qualities and/or radio forecasts.

3. Method according to Claim 1, **characterized in that** the speed of the vehicle is estimated from position information (p) on the vehicle and from a timestamp belonging to the position information.

4. Method according to Claim 3, **characterized in that** the number of reception paths (4.1 to 4.4) combined for a playback device rises with increasing speed.

5. Method according to any of the preceding claims, **characterized in that** the number of reception paths (4.1 to 4.4) that are selected for a playback device (5, 6) is selected on the basis of the number of playback devices (5, 6) that are simultaneously in operation for the reception and output of broadcast signals (3).

6. Method according to any of the preceding claims, **characterized in that** the playback devices (5, 6) are ranked, and **in that** lower-ranked playback devices (5, 6) are disabled if a required number of reception channels (4.1 to 4.4) for interference-free broadcast reception in a higher-ranked playback device are no longer available.

7. Method according to any of the preceding claims, **characterized in that** certain playback devices (5, 6) are disabled according to the driving conditions of the vehicle.

8. Method according to any of the preceding claims, **characterized in that** reception paths that are not used for the playback on playback devices (5, 6) are used to perform a background scan and/or for user services.

9. Method according to any of the preceding claims, **characterized in that** the number of reception paths (4.1 to 4.4) selected for a playback device (5, 6) are selected on the basis of a measured reception quality.

10. Broadcast receiving apparatus for connecting playback devices for the playback of broadcast signals to a broadcast receiver (5, 6), which has available a plurality of reception paths (4.1 to 4.4) in order to receive and computationally process broadcast signals (3) separately from one another, wherein each playback device (5, 6) can be connected to one or more reception paths (4.1 to 4.4) in order to play back received broadcast signals (3), and wherein a plurality of reception paths (4.1 to 4.4) can be combined for one playback device in order to improve the reception quality, **characterized in that** the broadcast receiving apparatus (1) has connections for connecting control units and/or sensors (8) and has a processing unit, wherein the processing unit is designed to implement the method according to any of Claims 1 to 9.

## Revendications

1. Procédé de réception de signaux radiodiffusés (3) dans un véhicule, plusieurs chemins de réception (4.1 à 4.4) d'un récepteur de radiodiffusion (2) étant disponibles pour recevoir des signaux radiodiffusés (3) séparément les uns des autres et les traiter de manière informatisée, et plusieurs appareils de reproduction (5, 6) pouvant respectivement être reliés de manière sélective à un ou plusieurs chemins de réception (4.1 à 4.4) en vue de reproduire les signaux radiodiffusés (3) reçus, plusieurs chemins de réception (4.1 à 4.4) pouvant être combinés pour un appareil de reproduction (5, 6) afin d'améliorer la qualité de réception, **caractérisé en ce qu'**une position actuelle du véhicule sur la surface terrestre est déterminée et **en ce que** le nombre de chemins de réception (4.1 à 4.4) qui sont combinés pour un appareil de reproduction (5, 6) est prédéfini en fonction de la position actuelle du véhicule.

2. Procédé selon la revendication 1, **caractérisé en ce qu'**une base de données avec des qualités de réception dépendantes de la position est déterminée à partir de qualités de réception mesurées et/ou de prédictions de radiodiffusion.

3. Procédé selon la revendication 1, **caractérisé en ce que** la vitesse du véhicule est estimée à partir des informations de position (p) du véhicule et un horodatage faisant partie des informations de position.

4. Procédé selon la revendication 3, **caractérisé en ce que** le nombre de chemins de réception (4.1 à 4.4) combinés pour un appareil de reproduction est accru à mesure que la vitesse augmente.

5. Procédé selon l'une des revendications précédentes, **caractérisé en ce que** le nombre de chemins de réception (4.1 à 4.4) qui peuvent être sélectionnés pour un appareil de reproduction (5, 6) est choisi en fonction du nombre d'appareils de reproduction (5, 6) qui sont simultanément en service pour la réception et la délivrance de signaux radiodiffusés (3).

6. Procédé selon l'une des revendications précédentes, **caractérisé en ce qu'**une hiérarchie des appareils de reproduction (5, 6) est prédéfinie et **en ce que** des appareils de reproduction (5, 6) subordonnés dans la hiérarchie sont déconnectés lorsqu'un nombre nécessaire de chemins de réception (4.1 à 4.4) pour une réception de radiodiffusion non perturbée n'est plus disponible dans un appareil de reproduction placé plus haut dans la hiérarchie.

7. Procédé selon l'une des revendications précédentes, **caractérisé en ce que** certains appareils de reproduction (5, 6) sont désactivés en fonction de la situation de conduite du véhicule.

8. Procédé selon l'une des revendications précédentes, **caractérisé en ce que** les chemins de réception qui ne sont pas utilisés pour la reproduction sur des appareils de reproduction (5, 6) sont utilisés pour exécuter un balayage de l'arrière-plan et/ou pour des services d'utilisateur.

9. Procédé selon l'une des revendications précédentes, **caractérisé en ce que** le nombre de chemins de réception (4.1 à 4.4) qui sont sélectionnés pour un appareil de reproduction (5, 6) est choisi en fonction d'une qualité de réception mesurée.

10. Appareil de réception de radiodiffusion destiné à connecter des appareils de reproduction destinés à la reproduction de signaux radiodiffusés à un récepteur de radiodiffusion (5, 6), lequel dispose de plusieurs chemins de réception (4.1 à 4.4) pour recevoir des signaux radiodiffusés (3) séparément les uns des autres et les traiter de manière informatisée, un appareil de reproduction (5, 6) pouvant respectivement être relié à un ou plusieurs chemins de réception (4.1 à 4.4) en vue de reproduire des signaux radiodiffusés (3) reçus, et plusieurs chemins de réception (4.1 à 4.4) pouvant être combinés pour un appareil de reproduction afin d'améliorer la qualité de réception, **caractérisé en ce que** l'appareil de réception de radiodiffusion (1) dispose de bornes servant au raccordement de contrôleurs et/ou de capteurs (8) ainsi que d'une unité de calcul, l'unité de calcul étant conçue pour mettre en oeuvre le procédé selon l'une des revendications 1 à 9.
